(19) Europäisches Patentamt
European Patent Office
Office européen des brevets

(11) **EP 4 056 630 A1**

(12) **EUROPEAN PATENT APPLICATION**

(43) Date of publication:
**14.09.2022 Bulletin 2022/37**

(21) Application number: **22161439.9**

(22) Date of filing: **10.03.2022**

(51) International Patent Classification (IPC):
**C08J 9/08** (2006.01)       **C08L 27/20** (2006.01)
**H01B 3/30** (2006.01)       **H01B 13/14** (2006.01)

(52) Cooperative Patent Classification (CPC):
(C-Sets available)
**C08J 9/08; C08K 3/34; C08K 5/098; C08L 27/12;
H01B 3/30; H01B 13/148;** C08K 2003/0812;
C08K 2003/085; C08K 2201/001       (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.03.2021 US 202163159711 P
09.03.2022 US 202217690168**

(71) Applicant: **Cable Components Group LLC
Pawcatuck, CT 06379 (US)**

(72) Inventors:
• **GLEW, Charles A.
Pawcatuck, 06379 (US)**
• **ROSA, Nicolas M.
Pawcatuck, 06379 (US)**
• **GLEW, Charles M.
Pawcatuck, 06379 (US)**

(74) Representative: **Marks & Clerk LLP
15 Fetter Lane
London EC4A 1BW (GB)**

(54) **FOAMABLE COMPOSITIONS AND METHODS FOR FABRICATING ARTICLES WITHIN A CABLE DESIGN**

(57)     A foamable composition includes a base polymer, talc blended with the base polymer, and a citrate compound blended with the base polymer. The foamable composition is usable as an insulator, a separator and a jacket for cables, such as communications cable. The foamable composition can include conductive inclusions in the foamable composition.

FOAMABLE PELLETS

FIG 1A

EP 4 056 630 A1

# FOAMABLE PELLETS
# WITH CONDUCTIVE INCLUSIONS

FIG 1B

(52) Cooperative Patent Classification (CPC): (Cont.)

C-Sets
**C08K 3/34, C08L 27/12;**
**C08K 5/098, C08L 27/12;**
**C08L 27/12, C08K 3/08, C08L 23/08**

**Description**

CROSS-REFERENCE TO RELATED APPLICATION DATA

This application claims the benefit of and priority to Provisional US Patent Application Serial No. 63/159,711, filed March 11, 2021, titled FOAMABLE COMPOSITIONS AND METHODS FOR FABRICATING ARTICLES WITHIN A CABLE DESIGN, the disclosure of which is incorporated herein in its entirety.

BACKGROUND

The present disclosure relates generally to foamable compositions, methods for processing such compositions to fabricate foamed articles, and foamed articles that can be fabricated using such foamable compositions within cable design.

A broad range of cables are installed in modern buildings for a wide variety of uses. Such uses include, among others, data transmission between computers, voice communications, video communications, power transmission over communications cables, e.g., power over ethernet (PoE), as well as control signal transmission for building security, fire alarm, temperature control systems, and LED lighting systems.

PoE to support the rapid growth of the Internet of Things (IoT) must simultaneously transmit power as well as data over the cabling. As the data transmission rates increase, so do the requirements for such cables to exhibit low internal cross-talk, including alien external cross-talk to adjacent cables laid together in cabling raceways. Many of these cables are shielded, and for the most part with an aluminum mylar tape over 4 twisted pairs and it is described as foil over twisted pairs and uses the acronym F/UTP. An integral part of the disclosed cable design will be the replacement of this aluminum mylar shield that requires grounding with a conductive tape and/or separator that acts as a discontinuous shield which will not require grounding. Therefore, both the tape and /or separator will functionally be extruded from pellets that will be formulated to impart a conductive discontinuous shield as well as being a chemically foamed fabrication via an extrusion process into a tape or separator. Additionally, the materials in these cables i.e. (insulation over copper, buffer over fiber, separator member, tape and/or jacket) will incorporate polymers via a materials selection process and criteria to meet and exceed the stringent requirements regarding flammability in cabling materials i.e. Mitigating Flame Spread and Smoke Generation to meet North Americas National Electric Code (NEC). For the European Union, an embodiment of this vision is the use and selection of halogen free materials targeted to the stringent European Union Construction Product Regulation (CPR) for fire hazard safety in cabling design.

There is a need for enhanced compositions or materials formulations, processing methods and cable designs, especially as the global growth of PoE comes to fruition sending both data and power to the Internet of Things (IOT).

The present disclosure provides cable designs in which chemically foamed materials are used as insulations over copper, buffers over fiber, and cable jacketing. Similarly, in the internals of the cable e.g., between insulation and jacket, support separators and/or tapes will be chemically foamed and may optionally have a dual function to act as a discontinuous shield mitigating the electromagnetic forces of cross talk between pairs and/or alien crosstalk between adjacent cables. As an additional aspect, cable jackets may also incorporate a dual functionality by the extrusion or co-extrusion of an inner discontinuous foamed shield lining underneath the solid or foamed jackets.

Specifically, the NEC would define these cable designs as communication cables (e.g., CMP, CMR, or CM); power limited cables (e.g., CL3P, CL2P, CL3R, CL2R, CL3, or CL2); fire alarm cables (FPLP, FPLR, or FPL); optical fiber cables and tubing (e.g., OFNP, OFCP, OFNR, OFCR, OFN, OFC); cable antenna and radio distribution (CATVP, CATVR, and CATV) as well as combination of hybrid optical fiber/copper designs which may be defined as CMP / OFNP, CMR / OFNR or CM / OFN. All of the aforementioned generic cable names are used globally, but may have slightly different acronyms or abbreviations.

SUMMARY

In one aspect, a foamable composition is disclosed, which comprises a base polymer, talc blended with the base polymer, and a citrate compound blended with the base polymer. In some embodiments, the concentration of the talc in the composition is in a range of about 0.3% to about 30% by weight, e.g., in a range of about 1% to about 25%, or in a range of about 2% to about 20%, or in a range of about 5% to about 10%. Further, the concentration of the citrate compound in the composition can be, for example, in a range of about 0.01% to about 1% by weight, or in a range of about 0.02% to about 0.9% by weight, or in a range of about 0.03% to about 0.8% by weight, or in a range of about 0.04% to about 0.7% by weight, or in a range of about 0.05% to about 0.6% by weight. Any of these concentrations of the citrate compound can be used with any of the concentrations of talc discussed above. In some embodiments, the citrate compound can be a citrate salt. Some examples of suitable citrate salts include, without limitation, calcium citrate, potassium citrate, zinc citrate and a combination thereof.

Further, in some embodiments, the weight concentration of the base polymer as a pellet can be, for example, in a range of about 50% to about 98.5%, e.g., in a range of about 60%, to about 95%, or, in a range of about 65% to about 90%, or in a range of about 70% to about 80%. Any of these concentrations of the base polymer can be used with any of the above concentrations of talc and/or the citrate compound. The aforementioned foaming agents can be incorporated in a wide range of polymers and can be applied to all aspects of a cable or cable design, including insulation or buffer, separator or tape, and/or jacket.

A variety of base polymers can be employed in a composition according to the present teachings. By way of example, in some embodiments, the base polymer can be a fluoropolymer, more specifically, polyvinylidene fluoride (PVDF), ethylene chlorotrifluoroethylene (ECTFE) or ethylene tetrafluoroethylene (ETFE). In some embodiments, the fluoropolymer can be a perfluoropolymer. Examples of some suitable base polymers include, tetrafluoroethylene/perfluoromethylvinyl ether copolymer (MFA), hexafluoropropylene/tetrafluoroethylene copolymer (FEP), perfluoroalkyl substances (PFAS), and perfluoroalkoxy alkane (PFA), and combinations thereof. The term "engineered resin" or "engineered polymer" as used herein refers to any of the following polymers: polyphenylenesulfide (PPS), polyetherimide (PEI), polysulfone (PSU), polyphenylsulfone (PPSU), polyethersulfone (PES/PESU), polyetheretherketone (PEEK), polyaryletherketone (PAEK), polyetherketoneketone (PEKK), polyetherketone (PEK), or polyolefins such as polyethylene (PE), polypropylene (PP), cyclic olefin copolymer (COC), polycarbonate (PC), polyphenylene ether (PPE), liquid crystal polymer (LCP), polymethyl methacrylate (PMMA), aliphatic or semi-aromatic polyamides (NYLON) and/or combinations thereof, and/or a combination of fluoropolymers, perfluoropolymers and any of the listed, as well as other engineered resins.

In some embodiments, the composition can be in the form of a plurality of pellets.

In some embodiments, a foamable composition according to the present teachings can include a base polymer, such as the polymers listed above, talc and a citrate compound (e.g., a citrate salt) blended with the base polymer as well as a nucleating agent blended with the base polymer. Some examples of suitable nucleating agents include, without limitation, PTFE (polytetrafluoroethylene), boron nitride, zinc oxide, and/or $TiO_2$. In some such embodiments, the concentration of the talc and the citrate compound can be as previously described, and the concentration of the nucleating agent can be, for example, in a range of about 0.3% to about 5% by weight.

Further, in some embodiments, in addition to talc and a citrate compound, and optionally a nucleating agent. Further, in some embodiments, a process aid, such as a wax, for example, Aclyn wax can be added to the foamable composition.

In a related aspect, a process for fabricating a foamed article is disclosed, which comprises heating a composition, which can be, for example, in the form of a plurality of pellets comprising a base polymer, talc blended with the base polymer, and a citrate compound blended with the base polymer to a temperature sufficient to cause decomposition of talc so as to generate gas for foaming the composition. By way of example, the composition can be heated to a temperature in a range of about 400 °F to about 800 °F, e.g., in a range of about 450 °F to about 750 °F, or in a range of about 500 °F to about 700 °F.

In some methods, the citrate compound can be a citrate salt, such as a calcium citrate, a potassium citrate, a zinc citrate or combinations thereof. calcium carbonate and/or magnesium carbonate may be added to generate higher foam rates in combination with talc and citrates at slightly lower temperatures for some of the engineered resins. In some methods, the composition that is subjected to heating can include, in addition to talc and a citrate compound blended with a base polymer, a nucleating agent, such as PTFE, that is also blended with the base polymer. Some examples of such compositions can further optionally include a process aid, such as a wax, for example, Aclyn wax.

Further, in some methods, the concentration of the base polymer in the composition can be, for example, in a range of about 50% to about 98.5% by weight, the concentration of the talc can be, for example, in a range of about 1% to about 30% by weight, and the concentration of the citrate compound can be, for example, in a range of about 0.01% to about 1% by weight. In methods in which a nucleating agent, such as PTFE, is incorporated in the composition, the concentration of the nucleating agent can be, for example, in a range of about 0.1% to about 5%, e.g., 0.3% to about 5%.

A variety of polymers, such as those previously disclosed, can be used in the above noted methods. In a related aspect, a foamed article for use in a wide range of cables components, such as insulation, separator or tape and jacket is disclosed, which could have a foam rate of at least about 20%, or at least about 30%, or at least about 40%, or at least about 50%, or at least about 60%. In some embodiments, such a foamed composition includes cellular structures having a size in a range of about 0.5 mils (0.0005 inches) to 5 mils (0.005 inches). In some embodiments, at least about 50%, or at least about 60%, or at least about 70%, or at least about 80%, or at least about 99%, or all of the cellular structures have a closed structure. By way of example, the foamed article can be a separator or tape suitable for use in a communications cable. Some separators can include a central portion and a plurality of arms extending from the central portion to provide a plurality of channels for receiving media. While in some embodiments, the separator can have a preformed structure, in other embodiments it can be a flexible tape. By way of example, the media can be twisted-pairs of electrical conductors, and optionally one or more optical fibers and combinations thereof. In some cases, the media disposed in the channels can be used for both data and power transmission. For example, the media can include twisted pairs of electrical conductors capable of carrying at least about 1 watt, or at least about 10 watts, or at least about 20 watts of power, e.g., in a range of about 20 watts to about 200 watts (e.g., the twisted pairs can be twisted copper pairs having an American Wire Gauge (AWG) in a range of 8 to 28 AWG, e.g., (18, 22, 23, or 24 AWG). In some embodiments, the data transmission media can optionally be either multi-mode or single-mode optical fibers in combination with the data and power mode of the aforementioned copper gauge sizes.

In some embodiments, the chemically foamable pellets according to the present teachings can be tube extruded, semi-pressure extruded or pressure extruded, e.g., over 8 (AWG) to 28 (AWG) (e.g., in a range of 16 AWG to 24 AWG) copper wire based on a phase change of the melt viscosity attributable to the combination of the chemical foaming agents (e.g., a combination of, for example, the talc and citrate) present in the pellets, therefore lowering the pressure of the extrudate below 3,500 pounds per square inch (psi) and in some cases, below 2,500 psi.

In a related aspect, the present disclosure provides a process for fabricating a foamed article that comprises subjecting a melted polymer (or a mixture of two or more melted polymers) to tube or semi-pressure or pressure extrusion to form the foamed article, e.g., insulation, separator, tape and/or jacket. In some embodiments, the melted polymer (or polymeric mixture) is extruded, e.g., through a die, while being subjected to a pressure in a range of about 2,500 psi to about 4,500 psi. In many such embodiments, the pressure of the extrudate is maintained below about 3,500 psi. A variety of polymers can be employed in such a process, including the aforementioned fluoropolymers and engineered polymers. In some embodiments, the compositions and processes according to the present teachings can be employed to form foamed insulations, separators or tapes, and/or jackets. Foamed fibers may be produced as well for filling the interstices of these cables via, for example, the so-called staple fiber extrusion manufacturing process, via the extrusion of a tape into a film process and scoring or thinly slitting the film into a so-called fibrillated fiber processing, and other processes. These products can be used as foamed fillers from the aforementioned fluoropolymers, perfluoropolymers and/or engineered resins or combinations thereof as cable fillers in the center of the cable and/or to fill the interstices of the cable.

In some embodiments, a cable for transmission of electrical power and data is disclosed that includes a foamed separator providing a plurality of channels for receiving transmission media, such as, electrical wires and/or optionally optical fibers. The separator can take a variety of different shapes, such as a cross shape, flap top separator shape, diamond shape, or circular shape. The aforementioned staple fiber or fibrillated fibers maybe similarly conformable into shapes within cable to nest the copper conductors or fibers. The optical fibers maybe nested with a glass reinforced rod, Kevlar fiber or the like for, for example, hybrid copper fiber cable designs that are manufactured for, and used in, indoor and outdoor environments.

In some embodiments, the separator can be flexible tape. In some embodiments, the separator or flexible tape can be foamed, e.g., the separator having a plurality of cellular structures and either tape or separator having distribution of foaming rate (i.e., a ratio or volume of cellular structures) distributed through the separator or tape relative to the volume of the separator or tape greater than about 20%, e.g., in a range of about 25% to about 70%, e.g., in a range of about 30% to about 70%. In some embodiments, at least one electrical wire albeit more commonly two wires formed as a so-called twisted pair that is capable of carrying electrical energy as well as communications data, is disposed in one of the channels. In some embodiments, such an electrical wire can have a wire gauge in a range of 8 AWG to 28 AWG, e.g., in a range of 16 AWG to 28 AWG, e.g., 18, 22, 23 or 24 AWG. Further, in some embodiments, such an electrical wire can carry a current in a range of about 0.5 amp to about 1 amp and electrical power up to about 200 watts, e.g., in a range of about 10 watts to about 200 watts. In some such embodiments, the insulation of the electrical wire can be foamed, e.g., with a foaming rate of at least about 20%, e.g., in a range of about 30% to about 50%, and in a range of about 60% to about 70%.

The separator and the insulation can be formed or extruded from foamable pellets using a variety of foamable fluoropolymers, perfluoropolymers, and/or engineered resins, such as those disclosed herein. In some embodiments, in another channel of the separator, an optical fiber can be disposed, for example, for transmission of communications data via light pulses, and have a buffer using a variety of foamable fluoropolymers, perfluoropolymers, or engineering polymers or blended fluoropolymers with engineered resins extruded as a buffer or coextruded as a buffer, such as, for example, PFA/PEEK.

A tape maybe foamed, and wrapped around the cross separator holding one or more pairs, or wrapped around each pair of insulated wires without separator or wrapped around each pair and/or wrapped around all of the pairs. The tape may also be used as a bisector tape laid in between the pair or laid horizontally and/or vertically separating two pairs of the four pairs, as an example.

Another aspect of these foamed separators and/or tapes in cable designs is that they can be extruded from a compounded pellet with a dual composition and functionality to incorporate both a chemical foaming agent and electrically conductive inclusions within the compounded pellet. The formulation of these ingredients in pellet form can then be extruded into a flexible tape or separator or even a co-extruded inner jacket lining providing dual functionality of chemical and electromagnetic noise interference mitigation, i.e., minimizing internal cable crosstalk and adjacent cabling alien crosstalk. The so called "Discontinuous Shielded Tape" with foam is extruded from these compounded pellets, and beneficially these cables would not require the added cost of grounding.

The aforementioned foamable materials having the dual functionality to act as a shield when extruded, would first be compounded into pellet form with the addition of electrically conductive elements; By way of example, the metal particulate or inclusions can be silver, aluminum, copper, gold, bronze, tin, zinc, iron, nickel, indium, gallium, and/or stainless steel. In some embodiments, the electrically conductive inclusions can include metal alloys, such as tin alloys, gallium alloys, and/or stainless steel.

Carbon nanotubes, carbon fullerenes, carbon fibers, nickel coated carbon fibers, single or multi wall graphene, or carbon fibers may be used and/or blended with the aforementioned metals.

In other embodiments, the electrically conductive inclusions can include metal oxides, such as copper oxide, bronze oxide, tin oxide, zinc oxide, zinc-doped indium oxide, indium tin oxide, nickel oxide, and aluminum oxide.

Further, in some embodiments, the electrically conductive inclusions are formed of metals and are substantially free of metal oxides. In some embodiments, a weight ratio of the conductive elements to the one or more fluoropolymers, perfluoropolymers or engineered resins, which inclusions include conductive metals, carbon nanotubes, carbon fullerenes and/or carbon fibers can be in a range of about 1% to about 30% by weight of the pellet composition. In some embodiments the electrically conductive inclusions comprise at least about 5% by weight of the pellet composition, at least about 7% by weight of the pellet composition, at least about 10% by weight of the pellet composition, at least about 15% by weight of the pellet composition, at least about 20% by weight of the pellet composition, and at least about 30% by weight of the pellet composition. In some embodiments, the electrically conductive elements can also have a plurality of different shapes. For example, a first plurality of the conductive elements can have needle-like shapes and a second plurality of the conductive elements can have flake-like shapes, e.g., rectangular shapes. In some embodiments, a first plurality of the conductive elements can have a shape primarily configured to reflect electromagnetic radiation in a range of about 1MHz to about 50 GHz. In some embodiments, a second plurality of the conductive elements can have a shape primarily configured to dissipate electromagnetic radiation in range of about 1 MHz to about 50 GHz. In some embodiments, the conductive elements comprise a plurality of particles having an average size in a range of about 10 microns to about 6000 microns, e.g., in a range of about 10 microns to about 50 microns, in a range of about 50 microns to about 500 microns, and in a range of about 500 microns to about 1000 microns.

In some embodiments, the above separator or tape exhibits a DC 3 conductivity along an axial direction in a range of about $1 \times 10^3$ Siemens/meter to about $3.5 \times 10^7$ Siemens/meter. In some embodiments, the above separator or tape has a sheet resistance in a range of about $1 \times 10^{-5}$ ohms per square to about $1 \times 10^{-5}$ ohms per square. In further aspects, a cable is disclosed, which comprises at least a pair of insulated twisted conductors, and a foamed semiconductive tape wrapped around the twisted pair of the solid or foamed insulated copper conductors, wherein the tape comprises a polymer i.e., fluoropolymer, perfluoropolymer and/or engineered polymer with a plurality of electrically conductive elements distributed therein for the electromagnetic shielding of the twisted pair or multi-pairs. The future of the proposed single pair shielded or unshielded single pair products are being developed for autonomous driven cars, factory automation and hospital surgical automation wherein high-speed data and power will run over a single pair cable simultaneously. The thermoplastic polymer carriers disclosed having dual functionality of compounded foamable pellets with conductive inclusions e.g. (metal or carbon nanotubes), is a highly desirable and complimentary innovation for connected PoE Internet devices supporting the Internet of Things (IoT). Foundationally, the twisted pair cable is likely to be the predominant medium for almost all PoE Internet cable in the foreseeable future.

The dual functionality from compounded pellets extruded into separators, tapes and/or a co-extruded inner lining layer under the solid or foamed overall jacket will further assist in the production and installation of these cables.

These polymers incorporating foaming agent as well as a shielding agent within a compounded pelletized material and used as separators, tapes, and/or co-extruded inner jacket liner are, for example, fluoropolymers such as PVDF, ECTFE and ETFE, perfluoropolymers such as FEP, MFA and PFA, "engineered polymers" such as PPS, PEI, PSU, PPSU, PES/PESU, PEEK, PAEK, PEKK, PEK, PE, PP, COC, PC, PPE, LCP, PMMA, NYLON and combinations of all of these polymers, such as PEEK/PFA.

The combination of fluoropolymers, perfluoropolymers and any of the engineered resins are examples of suitable thermoplastics that maybe extruded into separators and/or tapes. They have functionality as foamable discontinuous shields and based on NEC codes vis-à-vis CPR as well as evolving specifications for aerospace, shipboard, autonomous vehicles, etc.

The following chart compares conductivity of solid materials to the same materials with 30% and 50% foam. Foaming materials has a reciprocal conductive effect electrically and thermally as shown by the following chart:

Table 1- Conductivity of Various Fluoropolymers & Engineered Polymers and the Reciprocal Effects of Foaming to Optimize the Discontinuous Shielding of Cable Design via use of Separators and/or Tapes.

| Material | Thermal Conductivity | Thermal Conductivity Air | 30% Foam | 50% Foam |
|---|---|---|---|---|
| MFA | 0.2 | 0.026 | 0.1478 | 0.113 |

(continued)

| Material | Thermal Conductivity | Thermal Conductivity Air | 30% Foam | 50% Foam |
|---|---|---|---|---|
| FEP | 0.2 | 0.026 | 0.1478 | 0.113 |
| PTFE | 0.25 | 0.026 | 0.1828 | 0.138 |
| ECTFE | 0.16 | 0.026 | 0.1198 | 0.043 |
| PFA | 0.1 | 0.026 | 0.1408 | 0.108 |
| ETFE | 0.24 | 0.026 | 0.1748 | 0.113 |
| PEEK | 0.25 | 0.026 | 0.1828 | 0.138 |
| PES | 0.15 | 0.026 | 0.1128 | 0.088 |
| PEI | 0.22 | 0.026 | 0.1618 | 0.123 |
| PSU | 0.35 | 0.026 | 0.2606 | 0.188 |
| PPSU | 0.35 | 0.026 | 0.2606 | 0.188 |
| PVDF | 0.13 | 0.026 | 0.0988 | 0.078 |

PoE cables use will require higher temperature materials based on the power transmission of up to 1 amp adopted in the 2017 the National Electric Code (NEC) for the Internet of Things (IoT) including, for example, LED lighting, wireless access points and the like. Foaming polymers and airspace designs of cables will help to dissipate heat generated by power transmission over data cables. As such, chemically foaming all aspects of these cables from insulations, separators and tapes and jackets will be beneficial and safer.

Additionally, polymeric jackets can surround the separator or tapes and the transmission media disposed in the channels provided by the separator and/or tapes. In some embodiments, the jacket can be foamed, e.g., with a foaming rate equal to or greater than about 20%, e.g., in a range of about 20% to about 50%. Similar to the separator, tapes or wire insulation, the jacket can be foamed as a fluoropolymer, perfluoropolymer or engineered resin. Similarly, an inner layer or coextrusion of a polymeric foamed jacket with the inner layer being a foamed discontinuous shield is an aspect of the present disclosure. The discontinuous shield would not need a grounding wire nor need to be grounded for these cables with the foamed discontinuous shield. In some embodiments of the inner coextruded jacket, the separator or tape would have a weight ratio of the conductive elements to the one or more fluoropolymers, perfluoropolymers or engineered resins (e.g., polyolefins), with the conductive elements being, for example, conductive metals, carbon nanotubes, carbon fullerenes and/or carbon fibers, in a range of about 1% to about 30% by weight of the pellet composition. In some embodiments the electrically conductive elements comprise at least about 5% by weight of the pellet composition, at least about 7% by weight of the pellet composition, at least about 10% by weight of the pellet composition, at least about 15% by weight of the pellet composition, at least about 20% by weight of the pellet composition, or at least about 25% by weight of the pellet composition. In some embodiments, the electrically conductive elements can also have a plurality of different shapes. For example, a first plurality of the conductive elements can have needle-like shapes and a second plurality of the conductive elements can have flake-like shapes, e.g., rectangular shapes. In some embodiments, a first plurality of the conductive elements can have a shape primarily configured to reflect electromagnetic radiation in a range of about 1MHz to about 50 GHz. In some embodiments, a second plurality of the conductive elements can have a shape primarily configured to dissipate electromagnetic radiation in range of about 1 MHz to about 50 GHz. In some embodiments, the conductive elements comprise a plurality of particles having an average size in a range of about 10 microns to about 6000 microns, e.g., in a range of about 10 microns to about 50 microns, or in a range of about 50 microns to about 500 microns, or in a range of about 500 microns to about 1000 microns. In some embodiments, the above separator exhibits a DC conductivity along an axial direction in a range of about $1 \times 10^3$ Siemens/meter to about $3.5 \times 10^7$ Siemens/meter. In some embodiments, the above separator exhibits a sheet resistance in a range of about $1 \times 10^{-5}$ 5 ohms per square to about $1 \times 10^5$ ohms per square.

In a related aspect, a cable is disclosed, which comprises a separator or tape providing a plurality of channels for receiving one or more transmission media, the separator or tape comprising a plurality of cellular structures distributed therein at a foam rate up to about 40%, at least one electrical conductor disposed in one of the channels, the electrical conductor configured for transmission of both communication data and electrical power, at least one optical fiber disposed in one of the other channels, and a jacket surrounding the separator or tape, the at least one electrical conductor, and the at least one optical fiber.

In some embodiments of the above cable, the separator or tape may solely exhibit a foam rate of at least about 30%, e.g., in a range of about 30% to about 70%.

Further, in some embodiments, the electrical wire can include a foamed electrical insulation having a foam rate of at least about 25%, e.g., in a range of about 30% to about 60%. Further, in some embodiments of the above cable, the jacket can include a plurality of cellular structures distributed therein at a foam rate of at least about 15%, e.g., in a range of about 20% to about 50%.

Further understanding of the present disclosure can be obtained by reference to the following detailed description in conjunction with the associated drawings, which are described briefly below.

DESCRIPTION OF THE DRAWINGS

FIG. 1A is an illustration of foamable pellets in accordance with an embodiment of the present disclosure;
FIG. 1B is an illustration of foamable pellets having conductive inclusions in accordance with an embodiment;
FIG. 2A is a simplified flow diagram of a method for forming a foamed composition;
FIG. 2B illustrates a cable having a foamed insulation;
FIG. 2C illustrates a foamed separator;
FIG. 2D illustrates a foamed tape separator;
FIG. 3A is a simplified flow diagram of a method for forming a foamed composition having conductive inclusions;
FIGS. 3B and 3C illustrate a tape (FIG. 3B) and a separator (FIG. 3C) that have been extruded into a discontinuous foamed cable shield (FIG. 3B) and a separator (FIG. 3C);
FIG. 4 depicts a foamed separator;
FIG. 5 illustrates an example of a communications cable having a separator defining four channels for carrying transmission media;
FIG. 6 is a cross-sectional illustration of a cable having five channels and carrying various types of media, including power;
FIG. 7 illustrates another example of a communications cable having a separator defining four channels for carrying transmission media;
FIG. 8 is still another example of a cable having a co-extruded foamed polymeric semi-conductive inner jacket shielding layer;
FIG. 9 is an illustration of a foamed tape having conductive inclusions to wrap around pairs of conductors or to wrap around a separator (with pairs of conductors);
FIGS. 10 and 11 illustrate the measurement of AC and/or DC conductivity across the length of a separator; and
FIG. 12 illustrates a plurality of conductors disposed in respective channels defined or provided by the separator in a cable.

DETAILED DESCRIPTION

The present disclosure generally provides foamable polymeric compositions, which can be extruded as an insulation, separator, tape and/or jacket in a wide range of cables as disclosed herein. In particular, it has been found that the use of talc together with a citrate compound, such as a citrate salt, in a polymeric composition can advantageously provide enhanced small and closed cell foaming for multiple aspects of the cable design. In other words, it has been found that talc and the citrate compound can act synergistically to provide enhanced foaming. In some embodiments, the compositions according to the present disclosure are compounded into a plurality of pellets to ultimately be extruded as foamed insulation, foamed separator, foamed tape and/or foamed jacket.

Various terms are used herein according to their ordinary meanings. For additional clarity, the following terms are further defined below.

The term "talc" as used herein refers generally to natural or synthetic hydrated magnesium silicate compounds. In some embodiments, talc mineral comprises magnesium hydrosilicate represented by the formula: $3MgOSiO_2H_2O$, where in some cases $SiO_2$ is about 64.5 weight percent, MgO is about 31.9 weight percent and $H_2O$ is about 4.75 weight percent. In some cases, talc can include other minerals such as magnesite, chlorite, magnetite, carbonate, and dolomite. The term "engineered resin" or "engineered polymer" as used herein refers to any of the following polymers: polyphenylenesulfide (PPS), polyetherimide (PEI), polysulfone (PSU), polyphenylsulfone (PPSU), polyethersulfone (PES/PESU), polyetheretherketone (PEEK), polyaryletherketone (PAEK), polyetherketoneketone (PEKK), polyetherketone (PEK), or polyolefins such as polyethylene (PE), polypropylene (PP), cyclic olefin copolymer (COC), polycarbonate (PC), polyphenylene ether (PPE), liquid crystal polymer (LCP), polymethyl methacrylate (PMMA), aliphatic or semi-aromatic polyamides (NYLON) and/or combinations thereof.

The term "about" as used herein is intended to indicate a variation of at most 10%.

The term "foamed article" as used herein refers to an article of manufacture that includes a plurality of cellular structures.

The term "foamable rate", "foam rate," or "foaming rate" are used herein interchangeably and refer to the ratio of the volume of cells in a cellular structure, e.g., a cellular separator or tape, relative to the total volume of the structure.

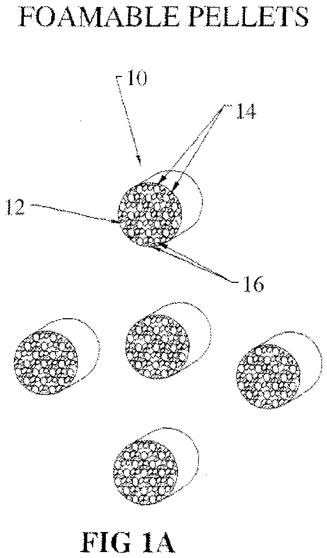

With reference to FIG. 1A, in some embodiments, the present disclosure provides a plurality of pellets 10, each of which includes a base polymer 12 as well as talc 14 and a citrate compound 16, such as a citrate salt, distributed through the polymer. In some embodiments, the talc can have a weight concentration in a range of about 1% to about 30%. By way of example, the talc can be present in the composition, e.g., in the pellets 10, at a weight concentration of about 2% to about 25%, or in a range of about 3% to about 15%, or in a range of about 4% to about 10%. Further, in some embodiments, the weight concentration of the citrate compound 16 in the composition, e.g., in the pellets 10, can be in a range of about 0.01% to about 1%, or in a range of about 0.02% to about 0.9%, or in a range of about 0.03% to about 0.8%, or in a range of about 0.04% to about 0.7%, or in a range of about 0.05% to about 0.6%, or in a range of about 0.06% to about 0.5%. Further, the weight concentration of the base polymer in the composition, e.g., the pellets 10, can be, for example, in a range of about 40% to about 98.5% by weight, e.g., in a range of about 50% to about 95%, or in a range of about 60% to about 90 %.

A variety of base polymers can be employed in a composition according to the present teachings. By way of example, in some embodiments, the base polymer can be a fluoropolymer, more specifically, polyvinylidene fluoride (PVDF), ethylene chlorotrifluoroethylene (ECTFE) or ethylene tetrafluoroethylene (ETFE). In some embodiments, the fluoropolymer can be a perfluoropolymer. Examples of these suitable base polymers include, tetrafluoroethylene/perfluoromethylvinyl ether copolymer (MFA), hexafluoropropylene/tetrafluoroethylene copolymer (FEP), perfluoroalkyl substances (PFAS), and perfluoroalkoxy alkane (PFA), and combinations thereof. The term "engineered resin" or "engineered polymer" as used herein refers to any of the following polymers: polyphenylenesulfide (PPS), polyetherimide (PEI), polysulfone (PSU), polyphenylsulfone (PPSU), polyethersulfone (PES/PESU), polyetheretherketone (PEEK), polyaryletherketone (PAEK), polyetherketoneketone (PEKK), polyetherketone (PEK), or polyolefins such as polyethylene (PE), polypropylene (PP), cyclic olefin copolymer (COC), polycarbonate (PC), polyphenylene ether (PPE), liquid crystal polymer (LCP), polymethyl methacrylate (PMMA), aliphatic or semi-aromatic polyamides (NYLON) and/or combinations thereof; and / or a combination of fluoropolymers, perfluoropolymers and any of the listed engineered resins herein.

In some embodiments, the citrate compound can be a citrate salt. Some suitable examples of citrate salts include, without limitation, calcium citrate, potassium citrate, zinc citrate and combinations thereof.

The combination of the talc and the citrate compound advantageously allows enhanced foaming of the pellets 10. By way of example, pellets containing a combination of talc and a citrate salt according to the present disclosure can be foamed at a much higher rate than similar pellets with only talc as the foaming agent. By way of example, in some embodiments, a pellet according to the present disclosure is foamable at a foaming rate of at least about 20%, or at least about 30%, or at least about 40%, or at least about 50%, or at least about 60%, or at least about 70%.

In some embodiments, the foaming of the compositions according to the present disclosure can result in a foamed article, such as a separator or tape suitable for use in a communications cable, which includes a plurality of cellular structures distributed therein. In some embodiments, at least about 20%, or at least about 30%, or at least about 40%, or at least about 50%, or at least about 60%, or at least about 70%, or all of the cellular structures can be in the form of closed cells. Further in some embodiments, such cellular structures can have a maximum size in a range of about (0.5 mils to 5 mils, i.e., 0.0005 inches to 0.005 inches).

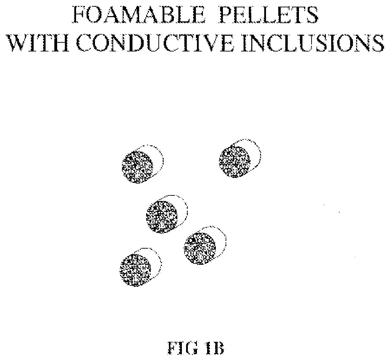

With reference to FIG. 1B, schematically, a plurality of pellets is shown according to an embodiment, in which the pellets include a base polymer, the foaming agent e.g. (talc, citrates) as well as electrically conductive inclusions. The inclusions can include metallic particulate in varying shapes or sizes and metallic as well as carbon fiber, fullerenes, or single wall or multi-wall graphene. All of which are discussed herein.

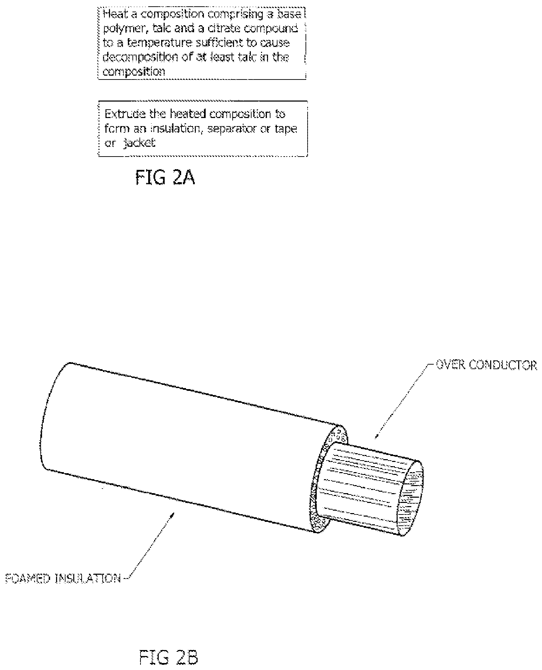

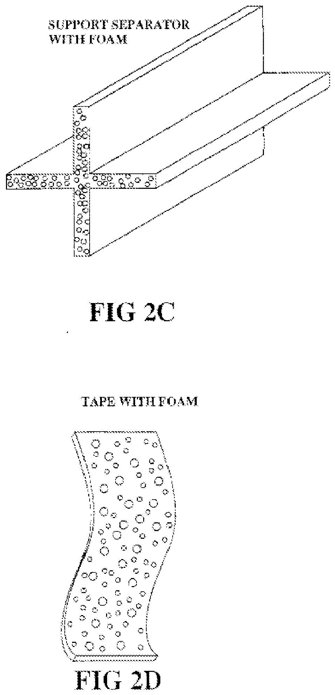

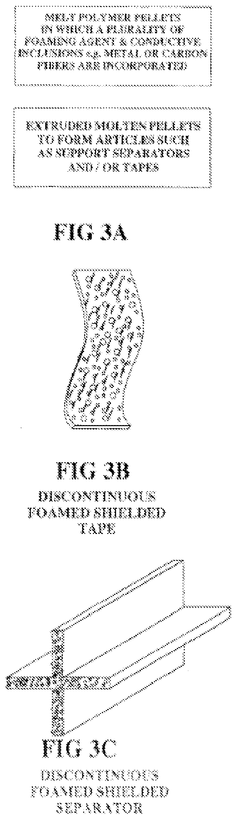

With reference to FIG. 2A, a step chart process for fabricating a foamed article is disclosed, which includes heating a composition comprising a base polymer, talc blended with the base polymer, and a citrate compound blended with the base polymer to a temperature sufficient to cause decomposition of at least talc so as to generate a gas for foaming the composition. By way of example, the composition can be heated to a temperature of at least about 400°F, or at least about 500°F, or at least about 600°F, or at least about 700°F. In some embodiments, the heated composition can be extruded to form a foamed insulation as shown in FIG. 2B. Alternatively, a foamed separator illustrated in FIG. 2C or a foamed tape illustrated in FIG. 2D can be formed. Alternatively, the foamed separator or tape may serve a dual function and incorporate the required attributes of a discontinuous shield by the addition of compounding the metal inclusions and/or carbon fibers of single wall or multi-wall graphene into the foamable pellets prior to extrusion. FIG. 3A illustrates a process flow of denoting the compounding of both the chemical foaming agents along with the metal inclusions and/or carbon fibers of single wall or multi-wall graphene. From those pellets, as illustrated in FIG. 3B, a tape can be extruded into a discontinuous foamed cable shield and/or as illustrated in FIG. 3C, a separator can be extruded into a discontinuous foamed cable shield.

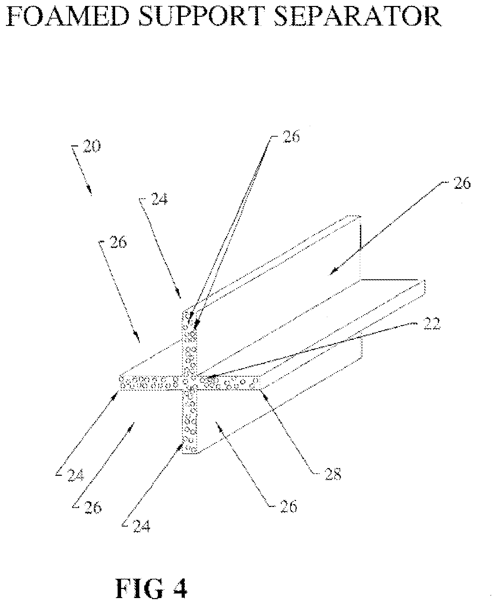

FIG. 4 schematically depicts a foamed article 20, in the form of a separator suitable for use in a communications cable, which is formed using methods according to the present disclosure. The separator 20 includes a central portion 22 from which a plurality of arms 24 extend that provide a plurality of channels 28 in which a variety of media, such as insulated twisted copper pairs, can be disposed. The separator 20 can be formed of a polymer, such as those disclosed herein, in which a plurality of cellular structures are distributed. In this embodiment, the cellular structures are in the form of gas-filled cavities. In some embodiments, the maximum size of these cellular structures, e.g., the diameter of the cellular structures when they have a spherical form, can be, for example, in a range of about 0.5 mil to 5 mil (about 0.0005 inches to 0.005 inches).

In some embodiments, the volume of the cellular structures is at least about 20%, or at least about 30%, or at least about 40%, or at least about 50% of the volume of the separator. Further, in some embodiments, at least about 30%, or at least about 50%, or at least about 70%, or at least about 90% of the cellular structures or all of the cellular structures can be in the form of closed cells.

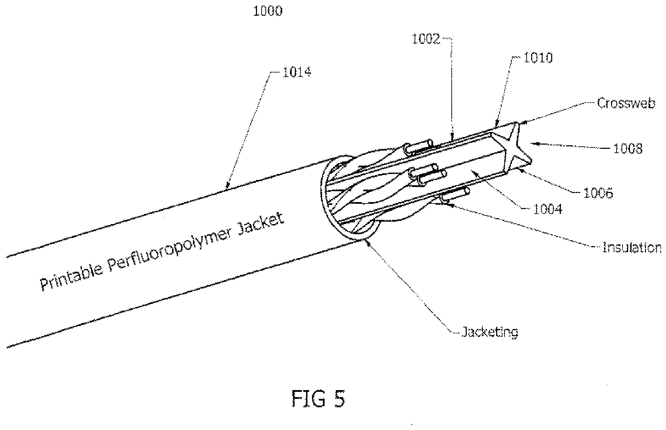

By way of further illustration, FIG. 5 schematically illustrates an example of a communications cable 1000, which includes a separator 1002 providing four channels 1004, 1006, 1008, and 1010 in any or all of which one or more transmission media can be positioned. In this embodiment, the separator 1002 has a substantially crossweb shape, though in other embodiments, the separator 1002 can have other shapes. In this embodiment, in each of the channels provided by the separator, a twisted pair of conductors can be disposed, where each conductor is surrounded by an insulation (the insulation obscures the view of the conductors in this figure).

The cable further includes a jacket 1014 within which the crossweb separator as well as the insulated twisted pairs of conductors are housed.

The entire cable design, that is the jacket 1014, the crossweb or tape separator 1002, and the insulation, also shown in FIG. 2B, can be foamed from the aforementioned chemical foaming ingredients and pelletized via compounding with fluoropolymers including polyvinylidene fluoride (PVDF), ethylene chlorotrifluoroethylene (ECTFE), or ethylene tetrafluoroethylene or the perfluoropolymers of tetrafluoroethylene / perfluoromethylvinyl ether copolymer (MFA), hexafluoropropylene/ tetrafluoroethylene copolymer (FEP), perfluoroalkoxy substances (PFAS), and perfluoroalkoxyalkane (PFA) , and combinations thereof, for optimum cable design performance. In some additional embodiments, any of the jacket 1014, the crossweb or tape separator 1002, and the insulations 1012 can be formed of a "engineered resin" as used herein and referring to any of the following polymers: polyphenylenesulfide (PPS), polyetherimide (PEI), polysulfone (PSU), polyphenylsulfone (PPSU), polyethersulfone (PES/PESU), polyetheretherketone (PEEK), polyaryletherketone (PAEK), polyetherketoneketone (PEKK), polyetherketone (PEK), or polyolefins such as polyethylene (PE), polypropylene (PP), cyclic olefin copolymer (COC), polycarbonate (PC), polyphenylene ether (PPE), liquid crystal polymer (LCP), polymethyl methacrylate (PMMA), or aliphatic or semi-aromatic polyamides (NYLON) and/or combinations thereof, and/or a combination of fluoropolymers, perfluoropolymers and/or any of the disclosed engineered resins. In any case, compounded foamable pellets can be derived from these base materials for the optimization of cable design, for example, 5G globally and more specifically for power over ethernet (PoE), and the Internet of Thing (IoT).

Within a cable design, one or all of the support separator as shown in FIG. 2C, tape separator as shown in FIG. 2D, insulation 1012 as shown in FIG. 5, and/or the jacket 1014 as also shown in FIG. 5 can have a polymeric foamed structure. For example, the foamed structure can include a plurality of air pockets that are distributed within the support separator, tape separator, insulation, and/or the jacket.

In some embodiments, the polymeric foamed structure of any of the separator, the tape separator, the conductor insulation(s) and the jacket can exhibit a foaming rate (i.e., a ratio of the volume of the cellular structures, for example, air pockets, distributed throughout the component relative to the total volume of that component) in a range of about 20% to about 60%, for example in a range of about 40% to about 50%. In some embodiments, the maximum dimension of the cellular structures (e.g. their diameters) can be, for example, in a range of about 0.0005 inches to about 0.005 inches.

In some embodiments, at least one of the twisted pairs of the conductors disposed in one of the channels provided by the separator 1002 can carry both communication data as well as electrical power. By way of example, such a twisted pair can be formed of copper wires having a gauge (AWG) in a range of 8 AWG to 28 AWG, and more typically in a range of 16 to 24 AWG, for example, 18 AWG for power and 23 AWG for data. This allows for higher amperage to, for example, power LED lighting, which is a further example of the need for foam insulation, foam support separators, foam tape separators and/or foam jackets as a solution to minimize or dissipate heat within cabling and transfer heat to adjacent cables when bundled together in raceways of commercial building cabling networks.

It has been unexpectedly found that in some embodiments in which the jacket 1014 has a foamed polymeric structure, the jacket is printable with, for example, letters, characters, and/or symbols, on the jacket using ink or other known techniques. By way of example, when the jacket is formed of foamed FEP, the jacket can be printable whereas a jacket formed of solid FEP is not printable.

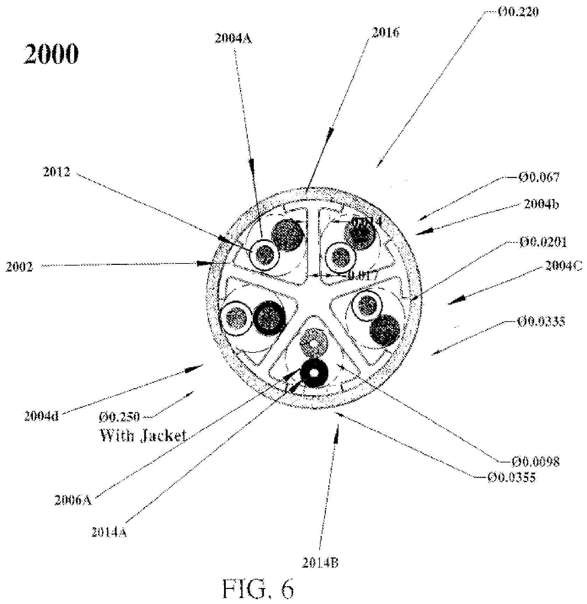

FIG. 6 schematically depicts an embodiment of a hybrid copper fiber cable design providing data communications and power. In this cable all of the components, such as copper insulation, fiber buffer, support separator or tape, and/or jacket may be foamed or solid. The support separator 2002 provides five channels for receiving transmission media. In this embodiment, the support separator 2002 has a flap-top configuration that allows for complete or partial closure of the channels (the dimensions provided in the figure are for illustrative purposes only and may not be to scale), and is not meant to limit alternative sizes of various components of the communication cable design. Four twisted pairs of conductors 2004A-D are disposed in four of the channels, and two buffered optical fibers 2006A are disposed in the fifth channel. In this embodiment, the twisted pairs of conductors are formed of 23 AWG copper wires, which allows for the transmission of communication data as well as electrical power.

Similar to the previous embodiment, the twisted pairs of conductors are covered with insulation 2012. Further, the optical fibers 2006A are surrounded by buffers 2014A. With continued reference to FIG. 6, a jacket 2016 surrounds the separator, the twisted pairs of conductors, and the optical fibers.

Any of the components of the communications cable 2000 shown in FIG. 6, individually or in combination with one or more other components, can be formed of a solid or a foamed polymeric material as described herein. By way of example, in some embodiments, the insulation(s) 2012 as well as the buffer 2014A can be formed as a foamed polymeric structure. In some embodiments, all components of the communications cable, including the support separator, the insulation(s), the buffers, and the jacket can be formed as a foamed polymer structure. Similar to the previous embodiment, in some embodiments, the foamed components of the communication cable 2000 can exhibit a foaming rate, e.g., in a range of about 20% to about 60%, or in a range of about 40% to about 50%. Further, in some such embodiments, the cellular structures of the foam (such as the air pockets) can exhibit a maximum dimension in a range of about 0.0005 inches to about 0.005 inches.

More specifically, to meet the North American NEC standards for cabling, the insulation 1012 can be formed of foamed FEP for plenum applications and can be formed of foamed FR polyolefin for riser applications. Further, in some such embodiments, a foamed fiber optic buffer for critical high temperature applications or plenum cable applications may use the chemical foamed formulation for PEEK polyetheretherketone or FEP, MFA, PFA perfluoropolymers or blends thereof, such as blends of PEEK/PFA.

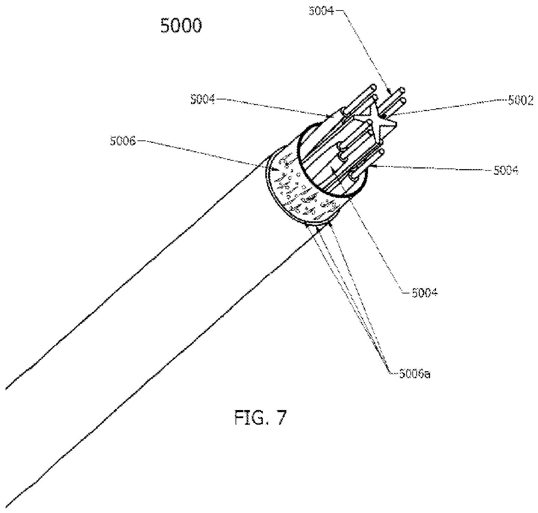

FIG. 7 schematically depicts an embodiment of a cable 5000 for devices such as wireless access points (WAP) that require both a communication cable for data communication and power. That is that cable, with or without a support separator 5002 provides a plurality of channels for receiving transmission media 5004 (which are a plurality of insulated twisted pairs of conductors in this embodiment). In some embodiments, the transmission media positioned in at least one of the channels can include one or more buffered optical fibers and/or typically higher gauge wire (e.g., from about 23 AWG to 16 AWG) in any of the channels.

A polymeric separator tape 5006 can at least partially, and in some embodiments completely, wrap around the separator 5002 if necessary, and the associated copper insulated transmission media 5004 (which can vary from about 16 AWG to 24 AWG. In this embodiment, the foamed tape 5006 is formed as a flexible polymeric sheet or so-called tape in which a plurality of conductive inclusions 5006a are distributed within the foamed tape. In some embodiments, the inclusions can be electrically conductive elements (e.g., micron shaped particles) that are distributed throughout the polymeric tape. By way of example, such electrically conductive inclusions can include, without limitation, silver, aluminum, copper, gold, bronze, tin, zinc, iron, nickel, indium, gallium, or stainless steel. In some embodiments, the electrically conductive inclusions can include metal alloys, such as tin alloys, gallium alloys, or zinc alloys. In other embodiments, the electrically conductive inclusions can include metal oxides, such as copper oxide, bronze oxide, tin oxide, zinc oxide, zinc-doped indium oxide, indium tin oxide, nickel oxide, or aluminum oxide. In some embodiments, some of the electrically conductive inclusions are formed of one material while others are formed by a multiple or at least two other metals and/or conductive carbon. In some embodiments, the electrically conductive inclusions are formed of metals and are substantially free of any metal oxides. Further, in some embodiments, the electrically conductive inclusions can include carbon nanotubes, such as single-walled carbon nanotubes. Additionally, metallic materials may be blended with carbon-based materials. By way of example, the metal particulate or inclusions may include silver, aluminum, copper, gold, bronze, tin, zinc, iron, nickel, indium, gallium, and/or stainless steel. In some embodiments, the electrically conductive inclusions can include metal alloys, such as tin alloys, gallium alloys, and/or stainless steel.

FIG. 7 depicts 5006 as a foamed discontinuous shield not requiring grounding and having the dual functionality of being a foamed polymer or blended polymers as well as a conductive discontinuous tape shield mitigating electromagnetic fields of pair to pair crosstalk and/or alien cross talk from adjacent cabling. The separator crossweb or separator tape may be foamed as well and optionally have the conductive inclusions so as to become a discontinuous tape shield, characteristic of an aluminum mylar, albeit not needing to be grounded which is a typical need of the installer when traditional aluminum mylar shielded cables are installed. A foamed discontinuous shielding tape used in concert or wrapped around a shielded support separator tape would enable an individually shielded twisted pair (ISTP) cable design. This ISTP design is widely used in Europe. Alternatively, a crossweb support separator can be foamed in this embodiment and utilize a conductive discontinuous foam tape to surround the pairs and foamed separator. Such a design is widely used in the North American cable market and would characteristically be defined as foil tape shield with unshielded individual pairs (F/UTP). In some embodiments, the electrically conductive inclusions can have a maximum dimension (e.g., a length and/or a cross-sectional dimension) in a range of about 10 microns to about 6000 microns, e.g., in a range of about 600 microns to about 1000 microns.

Furthermore, such conductive inclusions can be incorporated in any of the separators, tapes and/or, in an embodiment, as a coextruded jacket as disclosed previously, and other configurations, to, for example, enhance the shielding properties of these components without the need to ground the cable.

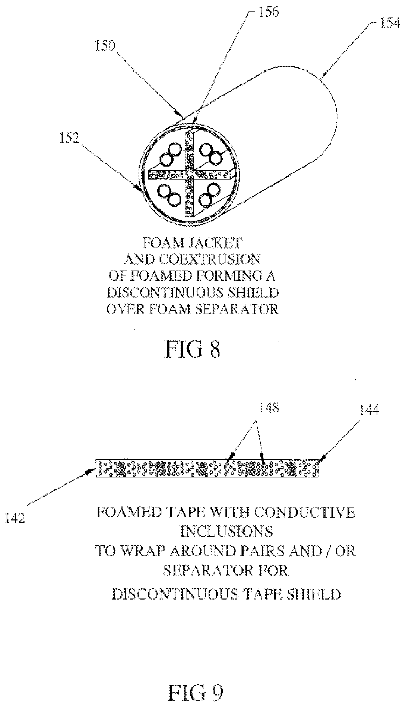

By way of example, FIG. 8 illustrates a cable jacket 150 according to an embodiment of the disclosure that has an elongated tubular shape, which extends from a proximal end 156 to a distal end 154. The elongated tubular shape of the cable jacket forms a shell, e.g., a polymeric shell, having an interior layer 152 adapted for housing one or more conductors. A plurality of metal inclusions and/or carbon-based inclusions 152 are distributed throughout the cable's inner polymetric jacket 150. In some embodiments, the metal and or carbon-based inclusions 152 are distributed via a coextrusion underneath the jacket and are distributed substantially uniformly within the inner diameter of the cable jacket 150.

In some embodiments, the cable jacket may comprise one or more different polymers, for example, a blend of one or more fluoropolymer, perfluoropolymers, and or engineered polymers or combinations thereof. In some cases, the metal inclusions can exhibit a variety of different shapes and/or be formed of different metals and carbon-based materials. In some embodiments, one type of the metal inclusions primarily reflects electromagnetic radiation within a frequency range (eg, 1 MHz to about 10 GHz) incident thereon while the other type of metal inclusions primarily absorbs the incident radiation in that wavelength range. In this manner, effective shielding of conductors via flexible support tapes, support separators and or inner coextruded jacket linings can accomplish the goal of discontinuous shields for twisted pair cable. The flexible foamed discontinuous shielding tape maybe used singularly or multiply with foamed support separators and/or inner foamed coextruded jacket lining.

The co-extruded foamed polymeric semi-conductive inner jacket shielding layer that surrounds the foamed support separator (in which the transmission media is disposed in the channels) may or may not need a foamed wrapped shielding tape (5006 in FIG. 7) based on the redundancy, although the added benefit may be a higher efficient shield for electromagnetic incidents with the duality of foamed discontinuous shielding tape working in conjunction with the co-extruded foamed discontinuous shield as a secondary overall jacket in a single pass extrusion. FIG. 9 illustrates an optional discontinuous shielded foamed tape wrap with metal/carbon-based inclusions that is foamed to provide an individual shield for each pair (ISTP) or an overall shield (F/UTP). Similar to the separator, tapes or wire insulation, the jacket and these tapes depicted in FIGS. 7-9 can be formed from compounded pellets utilizing a variety of polymers as carriers to include fluoropolymers, perfluoropolymers, and engineered resins, such as those polymers previously disclosed herein.

Comparison Examples of Foamable Pellets

A comparison of pellets formed from a blend of FEP polymer and talc were compared to pellets formed from a blend of talc and calcium citrate. The concentration of the FEP polymer in each blend was about 94% by weight. In the FEP/talc blended pellets the concentration of talc was about 3.75% by weight and in the FEP/talc/calcium citrate pellets, the concentration of talc was about 3.75% and the concentration of calcium citrate was about 0.05% by weight. Both the FEP/talc and FEP/talc/calcium citrate pellets also included a process aid, such as a wax, for example, Aclyn wax at about 0.05% by weight. It is to be understood that the use of a process aid, such as a wax, for example, Aclyn wax is optional, and that in some pellets it may not be used. The blends (that is, the FEP/talc/wax (i.e., Aclyn wax) and FEP/talc/calcium citrate/wax (i.e., Aclyn wax)) were compounded to produce a plurality of pellets of each blend. The blends or batches of pellets were processed separately at the process parameters indicated in Table 2, below. The processing of the pellets was performed on 1.5" high-temperature extruder with a general-purpose screw with a 26:1 L/D. The various components that make up the blend were mixed together on the line and put directly into the hopper of the extruder.

Table 2 - Process Parameters and Results for Forming Foamable Pellet Comparison

| Blend | FEP base polymer + 3.75% talc + 0.5% citrate | FEP base polymer + 3.75% talc |
|---|---|---|
| Diameter (in.) | 0.04 | 0.04 |
| Wire Diameter (in.) | 0.0226 | 0.0226 |
| Die (in.) | 0.185 | 0.185 |
| Tip (in.) | 0.092 | 0.085 |
| DDR | 23:1 | 23:1 |
| DRB | 1.01 | 1.03 |

(continued)

| Blend | FEP base polymer + 3.75% talc + 0.5% citrate | FEP base polymer + 3.75% talc |
|---|---|---|
| Crosshead | Canterbury | Canterbury |
| Screen Pack | 20/40/60 | 20/40/60 |
| Screw | General Purpose | General Purpose |
| Zone 1 (F) | 580 | 580 |
| Zone 2 (F) | 680 | 680 |
| Zone 3 (F) | 720 | 720 |
| Zone 4 (F) | 730 | 730 |
| Clamp (F) | 730 | 730 |
| Valve (F) | 730 | 730 |
| Head (F) | 730 | 730 |
| Die (F) | 730 | 730 |
| Melt Temperature (F) | 670 | 670 |
| RPM | 30 | 24 |
| Capstan Setting | 15 | 30 |
| Run Speed (FPM) | 303 | 606 |
| Pressure | 860 | 945 |
| Vacuum | -1.2 | -1.10 |
| Pre-Heat | 34.6 | 45.4 |
| Insulation S.G. | 0.89 | 1.45 |
| Foam Rate | 59% | 32% |
| Avg. Cell Size (in.) | 0.0023 | 0.0009 |
| Air Gap | 6 in | 6 in |

Table 3 - Machine Parameters for Forming Foamable Pellet Comparison

| Wall Thickness (inches) | 0.00955 |
|---|---|
| Wire OD (inches) | 0.0226 |
| Die OD (inches) | 0.042 |
| Gum Space (inches) | 0.25 |
| Clamp Temperature (°F) | 730 |
| Valve (°F) | 735 |
| Head (°F) | 740 |
| Die (°F) | 740 |

The results in Table 2, specifically, the foam rate and average cell size show that the use of talc together with citrate results in a much-enhanced foam rate relative to using only talc. In particular, a foam rate of 59% was observed for pellets containing both talc and citrate while a foam rate of 32% was observed for pellets

The foamed insulation as well as the extrusion process exhibited a number of advantageous properties. For example, at a thickness of 0.008 inches, which is consistent with communication insulation wall thicknesses, there were no spark failures, thus meeting the Underwriters Laboratory (UL) test protocol at 1250 volts. And, with respect to processing, the insulation process at 0.008 inches can be run at greater than 800 feet per minute in a pressure extrusion set-up. The extrusion process forms a closed cell on both the inner skin and the outer skin when forming an insulation over a conductor. The foamed insulation exhibited a tensile strength greater than about 2000 psi, an elongation greater than about 150%, and a foam rate of 35%.

The polymer carriers for foamable and conductive shielding disclosed herein as generally described as fluoropolymers, perfluoropolymers, or engineered resins and include polyolefins and/or combinations thereof. These polymers, incorporating foaming agent(s), as well as a shielding agent within a compounded pelletized material are useful to produce separators and/or tapes will provide a dual functionality and can be finely tuned as to a materials conductivity. Examples of the materials for separators, tapes, and/or co-extruded inner jacket liner include fluoropolymers such as PVDF, ECTFE and ETFE, perfluoropolymers, such as FEP, MFA and PFA, and "engineered polymers" including, more specifically, polyphenylenesulfide (PPS), polyetherimide (PEI), polysulfone (PSU), polyphenylsulfone (PPSU), polyethersulfone (PES/PESU), polyetheretherketone (PEEK), polyaryletherketone (PAEK), polyetherketoneketone (PEKK), polyetherketone (PEK), or polyolefins such as polyethylene (PE), polypropylene (PP), cyclic olefin copolymer (COC), polycarbonate (PC), polyphenylene ether (PPE), liquid crystal polymer (LCP), ), polymethyl methacrylate (PMMA), aliphatic or semi-aromatic polyamides (NYLON), and/or combinations of fluoropolymers, perfluoropolymers and any of the aforementioned engineered resins.

The combination of fluoropolymers, perfluoropolymers and any of the listed engineered resins are examples of suitable thermoplastics that maybe extruded into separators and/or tapes that may functionally be incorporated into the discussed cables as discontinuous shields. The following chart depicts the formulation combining the aforementioned foamed formula in combination with conductive pellets.

Working Examples

To further illustrate various aspects of the present disclosure, the following working examples are provided. These examples are provided for illustrative purposes only and are not intended necessarily to present optimal practice of the disclosure and/or optimal results that may be obtained by practicing the aspects of the present disclosure.

Conductive elements were combined with foamable base polymers as described in examples 1-8 in Table 4 below, in a melt compounder and extruded into pelletized form. More specifically, aluminum (Al) pellets marketed under the trade designation Silvet 220-20-E, aluminum flakes marketed under the trade designation K101 (600 micron by 1000 micron rectangular pellets with a 25 micron thickness), stainless steel (SS) pellets marketed under the trade designation STAPA WM REFLEXAL 212/80, and copper powder marketed under the trade designation BR- 83 UP COPPER were used as conductive elements. These conductive elements were incorporated into polyolefins and used as the initial carrier for blending into fluoropolymer, and/or engineered polymers. In Examples 1 to 4 chemical foaming agents were added to form foamable discontinuous shielding for use in a support separator, tape separator and/or co-extruded inner jacketing layer.

Table 4 - Metal Formulations Indicating Conductive, Formulation for Discontinuous Shields

| Formulation | 1 | 2 | 3 | 4 |
|---|---|---|---|---|
| **General Description** | Aluminum (Al) Pellets | Al Flakes | Al Flakes & Al Pellets | Stainless Steel (SS) Pellets & Al Pellets |
| **Specific Recipe** | 75% LDPE & 25% SIL VET 220-20-E Al Pigment | 75% LDPE & 25% K101 Al Flakes | 75%LDPE, 15%K101 Al Flakes & 10% SILVET 220-20-E Al Pigment | 75% LDPE, 15% Beki-Shield GR75/C12-E/6 & 10% SILVET 220-20-E Al Pigment |
| **Source** | SILBERLINE | Transmet Corporation | Transmet Corporation & SILBERLINE | BEKAERT & SILBERLINE |
| **Specific Gravity** | 1.0396 | 1.0861 | 1.0641 | 1.0838 |
| **Tensile (psi)** | 2892 | 1203 | 1960 | 1600 |
| **Elongation** | 55% | 46% | 64% | 109% |
| **% Metallic Content** | 20% | 28% | 22% | 19% |
| | | | | |
| **Formulation** | 5 | 6 | 7 | 8 |

(continued)

| General Description | Al Powder | Al Powder & SS Pellets | Copper | Copper & Al Pellets |
|---|---|---|---|---|
| Specific Recipe | 75% HDPE, 10% STAPA WM REFLEXAL 212/80 | 75% HDPE, 10% SAPA WM REFLEXAL 212/80, & 15% Beki-Shield GR75/C12-E/6 | 75% HDPE & 25% BR-83 UP COPPER | 75% HDPE, 10% BR-83 UP COPPER, & 15% SIL VET 220-20-E Al Pigment |
| Source | ECKART | ECKART & BEKAERT | ECKART | ECKART & SILBERLINE |
| Specific Gravity | 1.0693 | 1.0782 | 1.209 | 1.1149 |
| Tensile (psi) | 2719 | 3093 | 2802 | 3381 |
| Elongation | 55% | 36% | 46% | 46% |
| % Metallic Content | 20% | 19% | 25% | 22% |

It will be appreciated that a variety of techniques can be used to form the above polymeric compositions. In some embodiments, a base polymer is a fluoropolymer, e.g., PVDF or a perfluoropolymer, e.g., FEP or an engineered polymer, e.g., PEEK, that can be melted by exposure to elevated temperature, e.g., a temperature of at least about 500°F, and electrically conductive inclusions, e.g., metal particles, can be blended in with the melted base polymer. Further, in some embodiments, a chemical foaming agent and/or a nucleating agent can also be blended in the melted base polymer. In most embodiments, the blend can then be pelletized and later extruded for separator tapes, support separator crosswebs and / or inner liners of jackets. For example, an extruder, e.g., a twin-screw extruder, can be used to melt, blend and pelletize the polymer compositions. The design of the extruder can be such that there is sufficient heat and mechanical energy to fully thermally melt the polymer composition with proper distribution and dispersion during mixing for homogeneity, but yet mild enough to keep the processing temperature of the composition compound below that in which foaming occurs. The composition can be strand extruded and pelletized or alternatively formed in an underwater pelletizing process. Furthermore, a mixture of pellets can be used e.g. 1% to 20% foaming additives as previously described and tumble blended with .3% to 25% conductive inclusions. The above polymeric compositions can be processed by extrusion to form various articles. For example, in some embodiments, the pellets having both metal inclusions and a chemical foaming agent can be extruded to form conductive cellular articles, i.e., separator tapes, support crossweb separators or a co-extruded jacket layer.

<u>Separators and Tapes</u>

In one aspect, the present disclosure provides separators, e.g., for use in telecommunications cables, that include a plurality of electrically conductive inclusions, e.g., metal and carbon conductive particles, that are distributed therein to provide shielding of electromagnetic radiation. In some embodiments, such separators can be formed into predefined shapes, e.g., by extrusion via a die. For example, a die with a cross-shaped opening can be used to form an elongated separator that has an elongated cross-shaped form. In other embodiments, the separators can be in the form of flexible tapes extruded on wide width extrusion machinery, for example, 60 inches and subsequently slit into tape rolls, for example, a 1 inch tape, for use in cables, that can be cigarette folded or spiral wrapped onto a typical 4 pair Category 6, 6e, or 6A communications cable.

While in some embodiments the metal inclusions are distributed substantially uniformly within the body of the separator. In other embodiments, the spatial distribution of the metal inclusions can be non-uniform. By way of example, in some embodiments, the density of the metal inclusions in the proximity of the channel walls of the separator can be greater than the density in the central portion of the separator. As discussed in more detail below, the metal inclusions facilitate shielding the conductors disposed in the channels from one another, thereby minimizing and preferably eliminating cross-talk between conductors. In many embodiments, the separator is particularly effective in lowering the cross-talk in a frequency range of about 1 MHz to about 40 GHz, or in a range of about 1 MHz to about 10 GHz, or in a range of about 1 MHz to about 2 GHz, or in a range of about 1 MHz to about 1.5 GHz between the conductors disposed in neighboring channels. In other embodiments, the support separator and/or tape separator tape is particularly effective in lowering cross-talk in a frequency range of about 500 MHz to about 1 GHz, in a range of about 500 MHz to about 10 GHz, in a range of about 1 MHz to about 40 GHz, in a range of about 1 MHz to about 0 GHz, in a range of about 1 MHz to about 2 GHz, or in a range of about 1 MHz to about 1.5 GHz. These frequency ranges are particularly useful for tape separators and/or traditional mylar (PET)/aluminum foil tapes or in cables used for high speed data transmission. For example, to transmit information through cable at higher bit rates, a higher bandwidth is required which, in turn, requires transmission of signals at higher frequencies. The current data cabling performance requirements are defined by ANSI-TIA-568-C.2. One performance requirement for communications cables is known as "attenuation to crosstalk ratio, far end" (ACRF), which is a measure of how much signal is received at the far end of a given cable as a ratio of the interfering signal induced by adjacent conductor pairs in the cable.

The cables incorporate the support separators, separator tapes, and other materials according to embodiments of the present disclosure can reduce cross talk at a given frequency, thereby enabling high performance cable properties.

In some embodiments, certain types of the metal and/or carbon-based inclusions will primarily reflect electromagnetic radiation within a frequency range (e.g., a frequency range of about 1 MHz to about 10 GHz) while the other type of metal inclusions primarily absorb the incident radiation in that frequency range. In this manner, effective shielding of conductors, e.g., twisted-pair wires, housed in foamed discontinuous conductive tape separator and/or foamed discontinuous conductive support separators e.g., crossweb type extruded profiles or tape wrap around the cable, will achieve shielding effectiveness and not require grounding based on the absorption effect within the foamed polymers and the discontinuity.

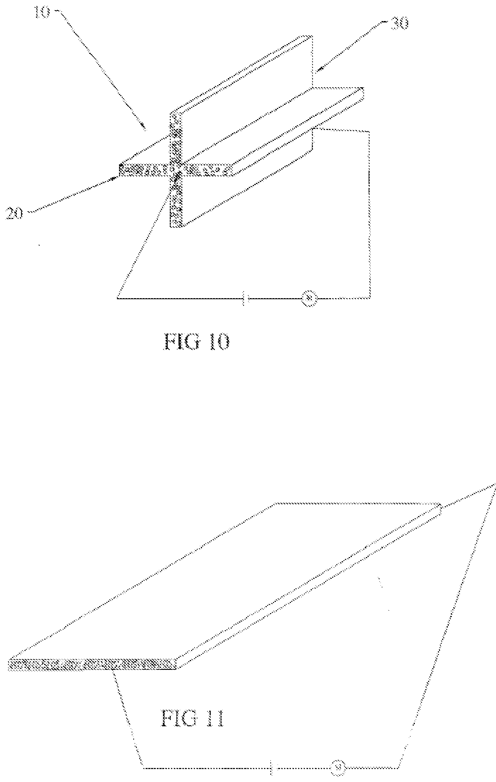

In some embodiments, the foamed discontinuous support separator as seen in FIG. 10 and the foamed discontinuous tape support separator as seen in FIG. 11 exhibit an axial DC (direct current) electrical conductivity that is in a range of about $1 \times 10^3$ Siemens/meter to about $3.5 \times 10^7$ Siemens/meter. Such an axial DC electrical conductivity (o) can be measured between the proximal end and the distal end of the crossweb support separator number by applying a DC voltage (V) between the proximal and distal ends of the crossweb separator, e.g., by employing a voltage source and measuring the DC current (I) flowing axially (i.e., in a direction from the proximal end to the distal end or *vice versa*) by using a DC current meter. Ohm's law can then be used to determine the DC electrical conductivity according to the following relation:

$$\sigma = I/V \qquad\qquad\qquad \text{Equation \#1}$$

where,

$\sigma$ denotes electrical conductivity,
V denotes DC voltage applied across the separator, and
I denotes DC current flowing through the separator in response to application of the voltage V

In some embodiments, the separator FIG. 10 or tape FIG. 11, exhibits an AC (alternating current) conductivity (symbol) (defined as the inverse of 3 7 AC impedance) in a range of about $1 \times 10^3$ Siemens/meter to about $3.5 \times 10$ Siemens/meter for frequencies in a range of about 1 MHz to about 40 GHz. The AC conductivity can be measured by applying an AC voltage axially across the separator (e.g., between the proximal end 20 and the distal end 30) and measuring the AC current through the separator 20 by using an AC current meter. The AC (o) conductivity can then be determined by using the following relation:

$$\sigma = I\,max/V\,max \qquad\qquad\qquad \text{Equation \#2}$$

where,

$\sigma$ denotes electrical conductivity
I max denotes the maximum of the measured AC current, and
V max denotes the maximum of the measured AC voltage.

In some embodiments, the materials used to form the support separator or separator tape can exhibit a sheet resistance in a range of about $1 \times 10^{-5}$ 5 ohms per square to about 1x10 ohms per square, or preferably about 10 ohms per square. It will be appreciated that the sheet resistance of a material will change depending on the thickness of the material. For example, sheet resistance (ohms per square) multiplied by the material's thickness in centimeters equals the volume resistivity of the material (ohms-cm). As such, the volume resistivity needed to achieve a given sheet resistance will depend on the thickness of the material in question. For example, a thicker material will provide the same volume resistivity with a less conductive material than a thinner material that is more conductive. As a more specific example, a tape with a thickness of 0.0254 cm (0.010 inches) can have a volume resistivity of 0.254 ohms-cm and a surface resistance of 10 ohms per square. If the thickness of the tape is reduced to 0.0127 cm (0.005 inches), the volume resistivity is reduced by half to 0.127 ohms-cm to achieve the same surface resistance of 10 ohms per square.

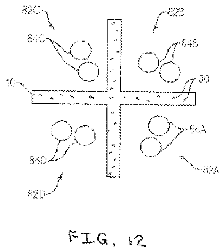

As shown schematically in FIG. 12, a plurality of conductors 84A-D (collectively conductors 84) can be disposed in respective channels 82A-D defined or provided by the separator 10. The conductors can be, for example, twisted pairs of wires. The foamed discontinuous shield support separator and/or foamed discontinuous shield tape (such as that shown in FIG. 9) minimizes, and preferably eliminates, cross-talk between the conductors disposed in different channels. For example, when conductors 84 are used to transmit telecommunications data at rates up to about 100 Gbits/sec, or in a range of about 1 Mbit/sec to about 100 Gbits/sec, or in a range of about 1 Mbit/sec to about 40 Gbits/sec, the metal inclusions 50, e.g., facilitate electromagnetic shielding of the conductors disposed in neighboring channels from one another. The shielding can in turn minimize, and preferably eliminate, the cross-talk between the neighboring conductors at frequencies corresponding to those emitted by the conductors, e.g., frequencies in a range of about 500 MHz to about 1 GHz or frequencies in a range of about 500 MHz to about 10 GHz. And, as shown in FIG. 9, the flexible foamed discontinuous shield tape may alternatively be used to wrap each pair or wrap all of the pairs versus the traditional continuous aluminum mylar shielding that requires grounding.

While the illustrated separators have a cruciform shaped cross-sectional profile, in other embodiments the separator can have other shapes. Examples of separators are disclosed in US Publication No. 2010/0206609, filed April 6, 2010, entitled "High Performance Support-Separators for Communications Cables Providing Shielding for Minimizing Alien Crosstalk," US Publication No. 2007/0151745, filed March 2, 2007, entitled "High Performance Support-Separators for Communications Cables," US Publication No. 2008/0066947, filed July 16, 2004, entitled "Support Separators for Communications Cable," and US Patent No. 7,098,405, filed May 1, 2002, entitled, "High Performance Support-Separator for Communications Cables," the teachings of which are each incorporated herein by reference in their entirety.

It will also be appreciated by those skilled in the art that the process of extruding the various components of the cables permits extreme flexibility in process techniques and steps. For example, all of the constituents of the polymeric composition (the polymer, talc, citrate, wax (e.g., Aclyn wax), nucleating agents, etc.) can be compounded into each pellet for extrusion. Alternately, a batch of pellets can include some of the constituents (such as the some of the polymer and talc), while another batch of pellets can include others of the constituents (such as some of the polymer and the citrate, the wax (e.g., Aclyn wax) and the nucleating agent), which batches of pellets are mixed in the extruder. Still other alternately, some of the pellets can include different concentrations of one or more constituents so that a wide variety of composition characteristics can be obtained as suitable for the specific application.

The invention can also be described by the following numbered clauses:

1. A composition, comprising: a base polymer, talc blended with the base polymer, and a citrate compound blended with the base polymer.

2. The composition of clause 1, wherein the concentration of the talc in the composition is in a range of about 3% to about 16%.

3. The composition of clause 1, wherein a concentration of the citrate compound in the composition is in a range of about 0.01% to about 1% by weight.

4. The composition of clause 1, wherein a concentration of the base polymer is in a range of about 50% to about 95% by weight.

5. The composition of clause 1, wherein the base polymer comprises a fluoropolymer.

6. The composition of clause 5, wherein the fluoropolymer is polyvinylidene fluoride (PVDF), ethylene chlorotrifluoroethylene (ECTFE), ethylene tetrafluoroethylene (ETFE) or combinations thereof.

7. The composition of clause 1, wherein the base polymer comprises a perfluoropolymer.

8. The composition of clause 7, wherein the perfluoropolymer is tetrafluoroethylene/perfluoromethylvinyl ether copolymer (MFA), hexafluoropropylene/tetrafluoroethylene copolymer (FEP), perfluoroalkoxy (PFA), perfluoroalkoxyalkane or combinations thereof.

9. The composition of clause 1, wherein the polymer is polyphenylenesulfide (PPS), polyetherimide (PSU), polyphenylsulfone (PPSU), polyethersulfone (PES/PESU), polyetheretherketone (PEEK), polyaryletherketone (PAEK), polyetherketoneketone (PEKK), polyetherketone (PEK), cyclic olefin copolymer (COC), polycarbonate (PC) polyphenylene ether (PPE), liquid crystal polymer (LCP), a polyolefins, polyethylene (PE), polypropylene (PP), cyclic olefin copolymer (COC), polycarbonate (PC), polyphenylene ether (PPE), liquid crystal polymer (LCP), polymethyl methacrylate (PMMA), aliphatic or semi-aromatic polyamides (NYLON) or combinations thereof.

10. The composition of clause 1, wherein the polymer is a fluoropolymer, a perfluoropolymer, polyphenylenesulfide (PPS), polyetherimide (PSU), polyphenylsulfone (PPSU), polyethersulfone (PES/PESU), polyetheretherketone (PEEK), polyaryletherketone (PAEK), polyetherketoneketone (PEKK), polyetherketone (PEK), cyclic olefin copolymer (COC), polycarbonate (PC) polyphenylene ether (PPE), liquid crystal polymer (LCP), a polyolefins, polyethylene (PE), polypropylene (PP), cyclic olefin copolymer (COC), polycarbonate (PC), polyphenylene ether (PPE), liquid crystal polymer (LCP), polymethyl methacrylate (PMMA), aliphatic or semi-aromatic polyamides (NYLON) or combinations thereof.

11. The composition of clause 1, wherein the citrate compound is calcium citrate, potassium citrate, zinc citrate or combinations thereof.

12. The composition of clause 1, further comprising a nucleating agent.

13. The composition of clause 12, wherein the nucleating agent is PTFE (polytetrafluoroethylene), boron nitride, zinc borate, zinc oxide, titanium dioxide or combinations thereof.

14. The composition of clause 12, wherein a concentration of the nucleating agent is in a range of about 0.1% to about 3% by weight.

15. The composition of clause 1, further comprising wax.

16. The composition of clause 15, wherein the wax is Aclyn wax.

17. The composition of clause 1,6 wherein a concentration of the Aclyn wax is in a range of about 0.1% to about 0.75%.

18. The composition of clause 1, wherein the composition is tube extruded, semi-pressure extruded or pressure extruded at an extrudate pressure of less than any of 3500 psi or 2500 psi.

19. A process for fabricating a foamed article, comprising: heating a composition comprising a base polymer, talc blended with the base polymer, and a citrate compound blended with the base polymer to a temperature sufficient to cause decomposition of talc to generate a gas for foaming the composition.

20. The process of clause 19, further comprising extruding the heated composition to form the foamed article.

21. The process of clause 19, wherein the temperature is at least about 500°F.

22. The process of clause 26, wherein the citrate compound is calcium citrate, potassium citrate, zinc citrate or combinations thereof.

23. The process of clause 19, wherein the concentration of the talc in the composition is in a range of about 3% to about 16%.

24. The process of clause 19, wherein a concentration of the citrate compound in the composition is in a range of about 0.01% to about 1% by weight.

25. The process of clause 19, wherein a concentration of the base polymer is in a range of about 50% to about 98.5% by weight.

26. The process of clause 19, wherein the base polymer is a fluoropolymer.

27. The process of clause 26, wherein the fluoropolymer is polyvinylidene fluoride (PVDF), ethylene chlorotrifluoroethylene (ECTFE) or ethylene tetrafluoroethylene (ETFE) or combinations thereof.

28. The process of clause 19, wherein the base polymer is a perfluoropolymer.

29. The process of clause 28, wherein the fluoropolymer is tetrafluoroethylene/perfluoromethylvinyl ether copolymer (MFA), hexafluoropropylene/tetrafluoroethylene copolymer (FEP), perfluoroalkoxy (PFA), perfluoroalkoxyalkane or combinations thereof.

30. The process of clause 19, wherein the base polymer is an engineering resin or engineering polymer.

31. The process of clause 30, wherein the engineering polymer is polyphenylenesulfide (PPS), polyetherimide (PEI), polysulfone (PSU), polyphenylsulfone (PPSU), polyethersulfone (PES/PESU), polyetheretherketone (PEEK), polyaryletherketone (PAEK), polyetherketoneketone (PEKK), polyetherketone (PEK), or polyolefins such as polyethylene (PE), polypropylene (PP), cyclic olefin copolymer (COC), polycarbonate (PC), polyphenylene ether (PPE), liquid crystal polymer (LCP), polymethyl methacrylate (PMMA), aliphatic or semi-aromatic polyamides (NYLON) or combinations thereof.

32. The process of clause 30 wherein the polymer is a fluoropolymer, a perfluoropolymer and polyphenylenesulfide (PPS), polyetherimide (PEI), polysulfone (PSU), polyphenylsulfone (PPSU), polyethersulfone (PES/PESU), polyetheretherketone (PEEK), polyaryletherketone (PAEK), polyetherketoneketone (PEKK), polyetherketone (PEK), or polyolefins such as polyethylene (PE), polypropylene (PP), cyclic olefin copolymer (COC), polycarbonate (PC), polyphenylene ether (PPE), liquid crystal polymer (LCP), polymethyl methacrylate (PMMA), aliphatic or semi-aromatic polyamides (NYLON) or combinations thereof.

33. The process of clause 19, wherein the composition is in the form of a pellet.

34. The process of clause 20, wherein the step of extruding the heated composition comprises pressure extruding the heated composition.

35. The process of clause 20, wherein the step of extruding the heated composition comprises semi-pressure extruding the heated composition.

36. The process of clause 20, wherein the step of extruding the heated composition comprises tube extruding the heated composition.

37. The process of clause 34, wherein the step of pressure extruding comprises maintaining a pressure to which the heated composition is subjected is less than about 3500 psi.

38. The process of clause 37, wherein the step of pressure extruding comprises maintain the pressure to which the heated composition is subjected is less than about 2500 psi.

39. The composition of clause 1, including electrically conductive inclusions in the composition.

40. The composition of clause 39, wherein the electrically conductive inclusions are silver, aluminum, copper, gold, bronze, tin, zinc, iron, nickel, indium, gallium, stainless steel, tin alloys, gallium alloys, zinc alloys, copper oxide, bronze oxide, tin oxide, zinc oxide, zinc-doped indium oxide, indium tin oxide, nickel oxide, aluminum oxide, multiple metals, multiple metal alloys, multiple metal oxides, conductive carbons, carbon nanotubes, single-walled carbon nanotubes, carbon fullerenes, carbon fibers, nickel coated carbon fibers, single or multi wall graphene, carbon fibers or combinations thereof.

41. The composition of clause 40, wherein the electrically conductive inclusions comprise a volume fraction of the composition in a range of about 1% to about 40%.

**Claims**

1.  A composition, comprising:

    a base polymer,
    talc blended with the base polymer, and
    a citrate compound blended with the base polymer.

2.  The composition of claim 1, further comprising a nucleating agent, wherein, optionally, the nucleating agent is PTFE (polytetrafluoroethylene), boron nitride, zinc borate, zinc oxide, titanium dioxide or combinations thereof, or, further optionally, wherein a concentration of the nucleating agent is in a range of about 0.1% to about 3% by weight.

3.  The composition of claim 1, further comprising wax, wherein the wax is optionally Aclyn wax, and, further optionally, wherein a concentration of the Aclyn wax is in a range of about 0.1% to about 0.75%.

4.  The composition of claim 1, wherein the composition is tube extruded, semi-pressure extruded or pressure extruded at an extrudate pressure of less than any of 3500 psi or 2500 psi.

5.  A process for fabricating a foamed article, comprising:
    heating a composition comprising a base polymer, talc blended with the base polymer, and a citrate compound blended with the base polymer to a temperature sufficient to cause decomposition of talc to generate a gas for foaming the composition.

6.  The process of claim 5, wherein the temperature is at least about 500°F.

7.  The process of claim 5, or the composition of claim 1, wherein the citrate compound is calcium citrate, potassium citrate, zinc citrate or combinations thereof.

8.  The process of claim 5 or the composition of claim 1, wherein the concentration of the talc in the composition is in a range of about 3% to about 16%, and/or wherein a concentration of the citrate compound in the composition is in a range of about 0.01% to about 1% by weight, and/or wherein a concentration of the base polymer is in a range of about 50% to about 98.5% by weight.

9.  The process of claim 5, or the composition of claim 1, wherein the base polymer is a fluoropolymer, and, optionally, wherein the fluoropolymer is polyvinylidene fluoride (PVDF), ethylene chlorotrifluoroethylene (ECTFE) or ethylene tetrafluoroethylene (ETFE) or combinations thereof.

10. The process of claim 5, or the composition of claim 1, wherein the base polymer is a perfluoropolymer, wherein, optionally, the fluoropolymer is tetrafluoroethylene/perfluoromethylvinyl ether copolymer (MFA), hexafluoropropylene/tetrafluoroethylene copolymer (FEP), perfluoroalkoxy (PFA), perfluoroalkoxyalkane or combinations thereof.

11. The process of claim 5, or the composition of claim 1, wherein the base polymer is an engineering resin or engineering polymer.

12. The process of claim 9, wherein the engineering polymer is polyphenylenesulfide (PPS), polyetherimide (PEI), polysulfone (PSU), polyphenylsulfone (PPSU), polyethersulfone (PES/PESU), polyetheretherketone (PEEK), polyaryletherketone (PAEK), polyetherketoneketone (PEKK), polyetherketone (PEK), or polyolefins such as polyethylene (PE), polypropylene (PP), cyclic olefin copolymer (COC), polycarbonate (PC), polyphenylene ether (PPE), liquid crystal polymer (LCP), polymethyl methacrylate (PMMA), aliphatic or semi-aromatic polyamides (NYLON) or combinations thereof;
or
wherein the polymer is a fluoropolymer, a perfluoropolymer and polyphenylenesulfide (PPS), polyetherimide (PEI), polysulfone (PSU), polyphenylsulfone (PPSU), polyethersulfone (PES/PESU), polyetheretherketone (PEEK), polyaryletherketone (PAEK), polyetherketoneketone (PEKK), polyetherketone (PEK), or polyolefins such as polyethylene (PE), polypropylene (PP), cyclic olefin copolymer (COC), polycarbonate (PC), polyphenylene ether (PPE), liquid crystal polymer (LCP), polymethyl methacrylate (PMMA), aliphatic or semi-aromatic polyamides (NYLON) or combinations thereof.

13. The process of claim 5, wherein the composition is in the form of a pellet.

14. The process of claim 5, further comprising extruding the heated composition to form the foamed article, wherein the step of extruding the heated composition comprises one or more of:

pressure extruding the heated composition, and, optionally, maintaining a pressure to which the heated composition is subjected is less than about 3500 psi, or, less than about 2500 psi
semi-pressure extruding the heated composition; or
tube extruding the heated composition.

15. The composition of claim 1, or the process of claim 5, further comprising electrically conductive inclusions in the composition,
wherein, optionally, the electrically conductive inclusions are silver, aluminum, copper, gold, bronze, tin, zinc, iron, nickel, indium, gallium, stainless steel, tin alloys, gallium alloys, zinc alloys, copper oxide, bronze oxide, tin oxide, zinc oxide, zinc-doped indium oxide, indium tin oxide, nickel oxide, aluminum oxide, multiple metals, multiple metal alloys, multiple metal oxides, conductive carbons, carbon nanotubes, single-walled carbon nanotubes, carbon fullerenes, carbon fibers, nickel coated carbon fibers, single or multi wall graphene, carbon fibers or combinations thereof;
wherein, optionally, the electrically conductive inclusions comprise a volume fraction of the composition in a range of about 1% to about 40%.

# FOAMABLE PELLETS

## FIG 1A

FOAMABLE PELLETS
WITH CONDUCTIVE INCLUSIONS

FIG 1B

Heat a composition comprising a base polymer, talc and a citrate compound to a temperature sufficient to cause decomposition of at least talc in the composition

Extrude the heated composition to form an insulation, separator or tape or jacket

FIG 2A

OVER CONDUCTOR

FOAMED INSULATION

FIG 2B

SUPPORT SEPARATOR
WITH FOAM

# FIG 2C

TAPE WITH FOAM

# FIG 2D

MELT POLYMER PELLETS
IN WHICH A PLURALITY OF
FOAMING AGENT & CONDUCTIVE
INCLUSIONS e.g. METAL OR CARBON
FIBERS ARE INCORPORATED

EXTRUDED MOLTEN PELLETS
TO FORM ARTICLES SUCH
AS SUPPORT SEPARATORS
AND / OR TAPES

## FIG 3A

## FIG 3B

DISCONTINUOUS
FOAMED SHIELDED
TAPE

## FIG 3C

DISCONTINUOUS
FOAMED SHIELDED
SEPARATOR

FOAMED SUPPORT SEPARATOR

FIG 4

FIG 5

FIG. 6

5000

5004

5004

5002

5006

5004

5004

5006a

FIG. 7

FOAM JACKET
AND COEXTRUSION
OF FOAMED FORMING A
DISCONTINUOUS SHIELD
OVER FOAM SEPARATOR

FIG 8

FOAMED TAPE WITH CONDUCTIVE
INCLUSIONS
TO WRAP AROUND PAIRS AND / OR
SEPARATOR FOR
DISCONTINUOUS TAPE SHIELD

FIG 9

FIG 10

FIG 11

FIG. 12

Europäisches
Patentamt

European
Patent Office

Office européen
des brevets

# EUROPEAN SEARCH REPORT

Application Number

EP 22 16 1439

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/109073 A2 (CABLE COMPONENTS GROUP LLC [US]) 6 June 2019 (2019-06-06) | 1-14 | INV. C08J9/08 |
| Y | * examples * * claims * | 1-15 | C08L27/20 H01B3/30 H01B13/14 |
| X | CN 106 009 258 A (GUANGZHOU JUZHU PATENT R & D CO LTD) 12 October 2016 (2016-10-12) | 1-5,7,8, 11,12,15 | |
| A | * examples * | 6,9,10, 13,14 | |
| Y | WO 2016/073862 A2 (CABLE COMPONENTS GROUP LLC [US]) 12 May 2016 (2016-05-12) * paragraph [0067] – paragraph [0076] * * examples * | 1-15 | |

TECHNICAL FIELDS
SEARCHED      (IPC)

C08J
C09J
C08K
C08L
H05B
H01B

The present search report has been drawn up for all claims

| Place of search | Date of completion of the search | Examiner |
|---|---|---|
| Munich | 26 July 2022 | Behm, Sonja |

## ANNEX TO THE EUROPEAN SEARCH REPORT
## ON EUROPEAN PATENT APPLICATION NO.

**EP 22 16 1439**

This annex lists the patent family members relating to the patent documents cited in the above-mentioned European search report.
The members are as contained in the European Patent Office EDP file on
The European Patent Office is in no way liable for these particulars which are merely given for the purpose of information.

**26-07-2022**

| Patent document cited in search report | | Publication date | Patent family member(s) | | Publication date |
|---|---|---|---|---|---|
| WO 2019109073 | A2 | 06-06-2019 | CA | 3084047 A1 | 06-06-2019 |
| | | | CN | 111655770 A | 11-09-2020 |
| | | | EP | 3717550 A2 | 07-10-2020 |
| | | | US | 2019169391 A1 | 06-06-2019 |
| | | | US | 2019276625 A1 | 12-09-2019 |
| | | | WO | 2019109073 A2 | 06-06-2019 |
| CN 106009258 | A | 12-10-2016 | NONE | | |
| WO 2016073862 | A2 | 12-05-2016 | EP | 3216030 A2 | 13-09-2017 |
| | | | US | 2016133355 A1 | 12-05-2016 |
| | | | US | 2018322985 A1 | 08-11-2018 |
| | | | WO | 2016073862 A2 | 12-05-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63159711
- US 20100206609 A
- US 20070151745 A
- US 20080066947 A
- US 7098405 B